Europäisches Patentamt

European Patent Office

Office européen des brevets

(11) Publication number: **0 044 660**

A1

(12) **EUROPEAN PATENT APPLICATION**

(21) Application number: **81303097.0**

(22) Date of filing: **07.07.81**

(51) Int. Cl.³: **F 16 J 15/32**
**F 16 C 33/76, B 65 G 39/09**

(30) Priority: **17.07.80 GB 8023466**

(43) Date of publication of application:
**27.01.82 Bulletin 82/4**

(84) Designated Contracting States:
**BE DE FR IT**

(71) Applicant: **AEROQUIP (U.K.) LIMITED**
**Studley Road, Redditch**
**Worcestershire B 98 7HQ(GB)**

(72) Inventor: **Egerton, Reginald Harry**
**11, Colleen Avenue**
**Kings Norton Birmingham 30(GB)**

(74) Representative: **Williams, Trevor John**
**J.A. KEMP & CO. 14 South Square Gray's Inn**
**London WC1R 5EU(GB)**

(54) A mechanical seal.

(57) A mechanical seal has an annular body for sealingly receiving a spindle (1) mounted in a roller bearing (4) with a frusto-conical skirt from the said seal body having a sealing lip (11) at its outer periphery in sealing engagement with the outer race (5) of the bearing (4), the annular skirt being lightly tensioned to urge the lip (11) into sealing engagement with the outer race (5) of the bearing (4). The annular body is provided on the side of the skirt remote from the bearing with radially operating seal means for cooperation with a cup (2) within which the bearing (4) is received. These radially operating seal means act to protect the axial seal (11) from the ingress of damaging foreign material.

Fig.1.

EP 0 044 660 A1

Croydon Printing Company Ltd.

- 1 -

## DESCRIPTION

## "A MECHANICAL SEAL"

This invention relates to a mechanical seal and more especially to an improved mechanical seal for mounting upon a shaft or spindle to be sealed. Conveyor rollers are often expected to operate in heavily polluted conditions giving need for the provision of a reliable seal which can provide an extended life to the machinery with minimal maintenance by retaining a lubricant in supporting bearings while at the same time preventing the bearing being contaminated with foreign material which may be abrasive or otherwise damaging.

In British Patent Specification No. 889530 there is disclosed a mechanical seal comprising an annular body adapted to be sealingly mounted on the outer periphery of a shaft or spindle to be sealed, a frusto-conical deflectable skirt projecting from a position on said body near, but spaced from, one end of the body, and an axially operable sealing lip defined at the free peripheral edge of the skirt, said sealing lip being located in a radial plane which, in the relaxed condition of the seal, is located beyond the said one end of the body.

The present invention is characterized in that said annular body is generally cylindrical and has provided thereon a radially operable sealing means comprised by an annular projection from the body at a location between said position from which said skirt projects and the other end of the body, said annular projection being comprised by an annular flange projecting substantially radially from said body and carrying an annular sealing lip having a diameter greater than that of the skirt.

With this arrangement the radial sealing means is quite divorced from the axial sealing skirt such that deflection of the sealing skirt rearwardly when being fitted into a sealing location will not cause any deflection of, or have any adverse effect on, the radial sealing means.

In its preferred environment the seal is used in conjunction with a shaft and a bearing therefor with the bearing comprising an inner race mounted on the shaft and an outer race mounted in an annular cup, the seal having its body sealingly receiving the shaft therein with the axially sealing lip on said skirt engaging a radial face of the outer race, the one end of the body engaging or being closely spaced from the radial face of the inner race, and the radially operable sealing means providing a seal with, or adjacent, the inner wall of the cup. With this arrangement the radially operable sealing means, which may actually be engageable with the inner wall of the cup, or member associated therewith, or be closely spaced therefrom to provide a labyrinth-type seal, acts to prevent the ingress of dirt and other foreign material from the outer end of the cup whereby the sealing lip on the skirt is maintained under substantially clean conditions so that it can act efficiently, and without excessive wear, to retain lubricant in the bearing and further to protect the bearing from foreign matter which may penetrate the radially operating sealing means.

Preferably the axially operable sealing lip comprises an axially outwardly facing bead at the periphery of the skirt and the frusto-conical skirt is of decreasing stiffness towards its periphery. Suitably the axial thickness of the skirt will decrease from the body towards the skirt periphery.

Preferably the radially operable sealing means comprises a plurality of axially spaced sealing lips carried by the said projection with the radial projection being comprised by an annular, substantially radially extending, flange provided at its periphery with an axially extending ring portion, the sealing lips being spaced axially along the outer peripheral surface of said ring portion.

The ring portion preferably is connected at one axial end to the radial flange with its free end projecting away from the skirt.

The seal is preferably injection moulding moulded from plastics material which is resilient and abrasion resistant. With this arrangement it has an "as moulded, memory condition" so that when used the skirt will be deformed resiliently to bias the sealing lip at its periphery into engagement with the outer bearing race. In the preferred form, as later described in detail, the seal of the invention is able to provide for adequate sealing of foreign material from the main functioning portion of the seal while at the same time compensating for radial variations, and the sealing lip can be used with very low torque resistance to provide safe and adequate sealing. By having the serially arranged radially operating seals together with the axial seal on the skirt it is possible to provide for a stepwise reduction in pressure differences between the outside and inside of the seal so as again to facilitate long life and a reliable sealing function.

The invention will be further described, by way of example, with reference to the accompanying drawings, in which:-

Figure 1 is an axial sectional view of a shaft and bearing arrangement provided with a mechanical seal in accordance with the present invention; and

Figure 2 is an axial sectional view, to a larger scale, of the mechanical seal as used in the view of Figure 1.

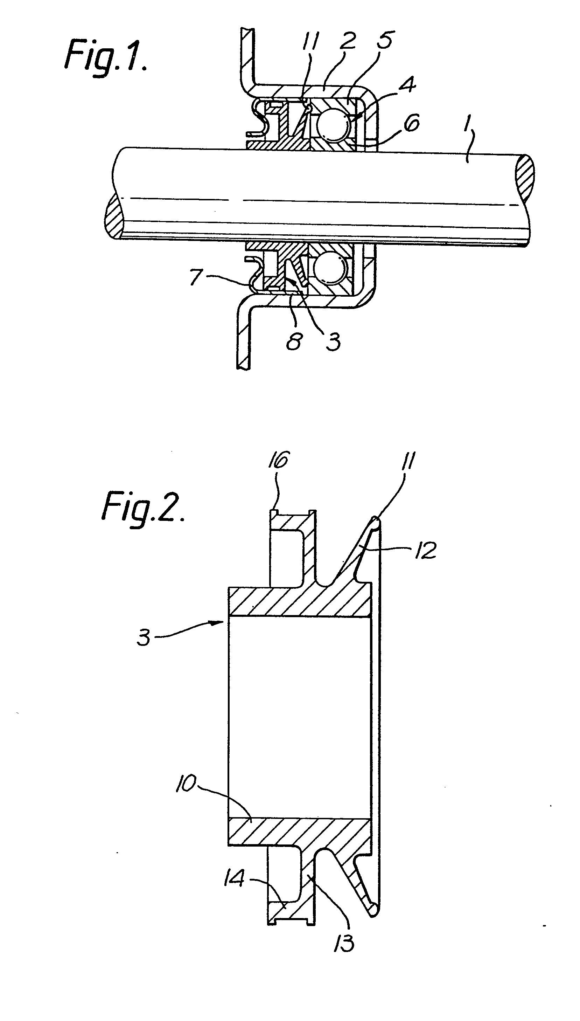

Referring to the drawings, Figure 1 shows a shaft 1 and an annular cup 2 which are rotatable one relative to the other. Either may be rotatable depending upon the particular environment. Thus the shaft 1 may be rotatable in a housing comprising the annular cup 2 or the annular cup 2 may form, for example, part of the end of a roller which is rotatable on the shaft 1.

The annular cup 2 and shaft 1 are supported for relative rotation by a roller bearing 4 comprising an inner race 6 mounting the shaft 1 and an outer race 5 mounting the cup 2. A seal 3 is held against the bearing 4 by means of retainer 7 having a cylindrical portion 6 engaged between the seal 3 and the radially inwardly facing wall of the annular cup 2.

As shown in Figure 2, the mechanical seal 3 comprises an annular body 10 provided near one end with a frusto-conical skirt 12 which itself is provided at its outer periphery with an axially facing sealing lip formed by a bead 11 about the circumference of the skirt. The lip provided by the bead 11 is in a radial plane which is located beyond one end of the body 10 in its relaxed condition as shown in Figure 2. An annular projection in the form of a radial flange 13 extends from the body 10 at a location behind the skirt 12 and at its outer periphery is formed with a rearwardly extending ring 14 carrying radially operating seal means in the form of annular sealing lips 15 and 16. The seal is injection moulded from a resilient plastics material which should be abrasion resistant to provide for long life of the seal. Polyurethane is a suitable material.

During installation of the seal in the arrangement as shown in Figure 1 the seal is a tight fit on the shaft 1 so as to be sealingly engaged and rotatable therewith. As is shown, a safety retaining clip 7 in the form of an annular metal cup assists in retaining the seal 3 in location against the bearing 4 as shown in Figure 1 although the engagement of the seal with the shaft 1 can be sufficient for this purpose. The radially extending lips 15 and 16 can simply frictionally engage the inner wall of the cup or, as shown in Figure 1, the inner wall of the annular ring portion 8 of the retaining member, although in some environments they can be slightly spaced therefrom in order solely to provide a labyrinth-type seal. When slidingly engaged with the internal surface of the cup 2 they can be biased in engagement therewith by deformation and deflection of the projecting flange 13 during insertion of the seal into the cup. By inserting the seal into the cup to the extent that the one end of the body 10 engages the radially extending end surface of the inner race 6 the skirt 12 is automatically deflected to just the desired amount to cause the sealing lip 11 to be urged gently against the radially extending surface of the outer race 5 to provide the required sliding sealing action between the bearing outer race 5 and the sealing lip 11. The outer race 5 will, of course, be so mounted in the cup 2 as to be sealed with respect thereto.

In the preferred mounting of the seal 3 the radial sealing lips 15 and 16 are only very lightly engaged with, or slightly spaced from, the cooperating surface of the cup 2 so as to provide a labyrinth seal with the minimum of friction although, as indicated above, additional frictional engagement may be called for in certain environments to provide improved sealing at that point should the wear factor be satisfactory. Should the outer bearing race 5 have an annular face which is not in an accurate radial plane relative to the shaft 1 the mechanical seal as disclosed will still operate adequately with slight flexing, during use, of the skirt

This is particularly so in the particular environment envisaged especially for the seal of the present invention, namely in use with the bearings supporting the rollers of roller conveyors which frequently will only be rotating intermittently and/or at a relatively slow speed.

CLAIMS

1.  A mechanical seal comprising an annular body (10) adapted to be sealingly mounted on the outer periphery of a shaft or spindle (1) to be sealed, a frusto-conical deflectable skirt (12) projecting from a position on said body near, but spaced from, one end of the body, and an axially operable sealing lip (11) defined at the free peripheral edge of the skirt, said sealing lip being located in a radial plane which, in the relaxed condition of the seal, is located beyond the said one end of the body, characterized in that said annular body (10) is generally cylindrical and has provided thereon a radially operable sealing means comprised by an annular projection (13) from the body at a location between said position from which said skirt projects and the other end of the body, said annular projection being comprised by an annular flange (13) projecting substantially radially from said body and carrying an annular sealing lip (15,16) having a diameter greater than that of the skirt (12).

2.  A seal according to claim 1, characterized in that the axially operable sealing lip comprises an axially outwardly facing bead (11) at the periphery of the said skirt (12).

3.  A seal according to claim 1 or 2, characterized in that the frusto-conical skirt is of decreasing stiffness towards its periphery.

4.  A seal according to claim 3, characterized in that the axial thickness of the skirt decreases from the body towards the skirt periphery.

5.  A seal according to any preceding claim, characterized in that the radially operable sealing means comprises a plurality of axially spaced sealing lips (15,16) carried by said projection (13,14).

6.    A seal according to claim 5, characterized in that the radial projection is comprised by an annular substantially radially extending flange (13) provided at its periphery with an axially extending ring portion (14), the sealing lips (15,16) being spaced axially along the outer peripheral surface of said ring portion.

7.    A seal according to claim 6, characterized in that the ring portion (14) is connected at one axial end to the radial flange (13) with its free end projecting away from the skirt (12).

8.    A shaft and bearing therefor sealed with the seal of any preceding claim, characterized in that said bearing comprises  an inner race (6) mounted on the shaft (1) and an outer race (5) mounted in an annular cup (2), said seal (3) having its body sealingly receiving the shaft therein with the axially sealing lip (11) on said skirt engaging a radial face of said outer race (5), the one end of the body engaging or being closely spaced from the radial face of said inner race, and the radially operable sealing means providing a seal with the inner wall of the cup (2).

9.    An assembly according to claim 8, characterized in that an annular retaining member (7) is provided for retaining the mechanical seal within the said annular cup.

10.    An assembly according to claim 9, characterized in that the retaining member (7) has an annular portion (8) in sealing engagement with the cup (2) interposed between the sealing means and the cup wall.

Fig.1.

Fig.2.

0044660

**European Patent Office**

**EUROPEAN SEARCH REPORT**

Application number

EP 81 30 3097

## DOCUMENTS CONSIDERED TO BE RELEVANT

| Category | Citation of document with indication, where appropriate, of relevant passages | Relevant to claim |
|---|---|---|
| X | DE - A - 2 023 007 (VEB)<br><br>* Page 5, lines 12-15; figure 2 *<br><br>-- | 1,3,4 |
| | US - A - 3 489 468 (BUCK)<br><br>* Column 4, line 10 - column 5, line 23; column 5, lines 56-63; figure 4 *<br><br>-- | 1,3,4,8 |
| | ENGINEERING MATERIALS AND DESIGN, vol. 15, May 1972, no. 5, London, GB<br>"Sealing rolling bearings", pages 410-414<br><br>* Page 413; figure 34 *<br><br>-- | 1,3,4,8 |
| | FR - A - 1 242 724 (LEMARESQUIER)<br><br>* Page 2, left-hand column, lines 5-13; figures 1,3 *<br><br>-- | 5,8 |
| | GB - A - 867 005 (PIONEER)<br><br>* Page 1, lines 55-71; figure 1 *<br><br>-- | 6,7 |
| | FR - A - 2 171 041 (VOM STEIN)<br><br>* Page 4, lines 13-18; figure 1 *<br><br>-- | 9 |
| | FR - E - 79114/FR - A - 1 230 578 (A.M. DOUAISIS)<br><br>* Page 1, right-hand column, line 27 - page 2, left-hand column, line 5; figure 18 *<br><br>---- | 9,10 |

**CLASSIFICATION OF THE APPLICATION (Int. Cl.³)**

F 16 J 15/32
F 16 C 33/76
B 65 G 39/09

**TECHNICAL FIELDS SEARCHED (Int Cl ³)**

F 16 J
F 16 C
B 65 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 21-10-1981 | BARON |

EPO Form 1503.1   06.78